# FASCICULE DE BREVET EUROPEEN

(11) **EP 0 778 311 B1**
(45) Date de publication et mention de la délivrance du brevet: **26.01.2000**
(21) Numéro de dépôt: 96116568.5
(22) Date de dépôt: 16.10.1996
(51) Int. Cl.: C08K 3/36, C08C 19/44, C08G 77/442, C08L 19/00, C08L 21/00, B60C 1/00

(54) **Composition de caoutchouc à base de silice et de polymère diénique fonctionnalisé ayant une fonction silanol terminale**
Kautschukzusammensetzung auf Basis von Siliciumdioxyd und einem funktionalisierten Dienpolymer mit einer Silanol-Endgruppe
Rubber composition based on silica and a functionalized diene polymer terminated with a silanol group

(30) Priorité: 07.11.1995 FR 9513249
(43) Date de publication de la demande: 11.06.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Cabioch, Jean-Luc, 63000 Clermont-Ferrand (FR); Labauze, Gérard, 63100 Clermont-Ferrand (FR)
(74) Mandataire: Hiebel, Robert

(56) Documents cités:
- EP-A- 0 299 074
- US-A- 3 928 490
- US-A- 4 618 650

## Description

La présente invention est relative à une composition de caoutchouc utilisable notamment pour la fabrication d'enveloppes de pneumatiques, possédant des propriétés hystérétiques améliorées à l'état vulcanisé, comprenant un polymère diénique fonctionnalisé en bout de chaîne par une fonction silanol ou un bloc polysiloxane ayant une extrémité silanol et de la silice à titre de charge renforçante.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation de polymères modifiés avec du noir de carbone comme charge renforçante dans le but d'obtenir une bonne interaction entre le polymère modifié et le noir de carbone. A titre d'exemples illustratifs de cet art antérieur, nous pouvons citer le brevet US- B- 3 135 716 qui décrit la réaction de polymères diéniques vivants en fin de chaîne avec un agent de couplage organique polyfonctionnel pour obtenir des polymères aux propriétés améliorées et le brevet US-B-3 244 664 qui décrit à titre d'agent de couplage ou d'étoilage de polymères diéniques des tétra-alcoxysilanes.

L'intérêt d'utiliser de la silice à titre de charge renforçante dans des compositions de caoutchoucs, notamment destinées à entrer dans la constitution de bandes de roulement de pneumatiques, est ancien. Cependant, l'usage de la silice à titre de charge renforçante dans de telles compositions est resté très limité en raison du faible niveau de certaines propriétés, notamment la faible résistance à l'abrasion, de telles compositions.
Ainsi, il a été proposé d'utiliser des polymères diéniques fonctionnalisés à la place de polymères non fonctionnalisés. La quasi-totalité de l art antérieur est relatif à des polymères fonctionnalisés par des dérivés alcoxysilanes. Préférentiellement des dérivés tétra-alcoxysilanes parmi lesquels le tétraéthoxysilane ont été décrits et plus récemment ont été divulgués des alcoxysilanes dont les groupements sont ou non hydrolysables.

A titre d'exemple d un tel art antérieur, on peut citer le brevet US-B-3.244.664 qui décrit des polymères diéniques fonctionnalisés par des siloxanes ayant au moins 2 restes alcoxyles et des compositions exhibant des propriétés améliorées. Le brevet US-B-5.066.721 qui décrit une composition de caoutchouc diénique chargée à la silice à base d un polymère diénique fonctionnalisé à l'aide d un alcoxysilane ayant au moins un reste alcoxyle non hydrolysable permettant l'élimination du solvant de polymérisation des polymères ainsi fonctionnalisés par un stripping à la vapeur d'eau.

Des réactions de couplage sont souvent observées lors de telles réactions de fonctionnalisation et, afin de les minimiser, un excès d'alcoxysilane et/ou un mélangeage intense sont généralement utilisés.

En outre, soit les agents de fonctionnalisation alcoxysilanes conduisent à des polymères fonctionnalisés qui ne peuvent être soumis à un stripping à la vapeur d eau pour éliminer le solvant de polymérisation car dans ce cas ils subissent une évolution macrostructurale qui conduit à une sévère dégradation des propriétés potentiellement intéressantes, soit les agents de fonctionnalisation permettant l'opération de stripping à la vapeur d eau appartiennent à la famille très restrictive des alcoxysilanes décrits dans le brevet US-B-5.066.721 et non disponibles industriellement, ce qui constitue un handicap au niveau d une exploitation industrielle.

Malgré l'amélioration des propriétés obtenues avec l'emploi de tels polymères ainsi fonctionnalisés, les compositions à base de silice décrites dans cet art antérieur ne se sont pas révélées satisfaisantes pour constituer des bandes de roulement de pneumatiques.

Il est fait état dans l art antérieur de polystyrènes portant en bouts de chaîne une fonction silanol (Makromol. Chem. 79, 1964, p.149-160) mais ces polymères ne sont que des composés intermédiaires. Il est également connu d'après le brevet US-B-4.618.650 d'utiliser des polymères diéniques fonctionnalisés par un reste silanol à titre de composés intermédiaires pour la préparation de polymères diéniques réticulés ayant des propriétés à l'état non vulcanisé, notamment de fluage à froid, améliorées.

La demanderesse vient de découvrir de manière surprenante que les polymères diéniques portant en extrémité de chaîne une fonction silanol ou un bloc polysiloxane ayant une extrémité silanol peuvent être séparés du milieu réactionnel conduisant à leur formation par extraction à la vapeur d eau du solvant et confèrent aux compositions vulcanisées comprenant de la silice à titre de charge renforçante, des propriétés de caoutchouterie, et en particulier des propriétés hystérétiques, améliorées par rapport à des compositions à base de polymères diéniques non fonctionnalisés et au moins du même niveau que celles de compositions à base de polymères diéniques fonctionnalisés alcoxysilanes.

L'invention concerne une composition de caoutchouc vulcanisable comprenant au moins un polymère diénique fonctionnalisé, de la silice à titre de charge renforçante et les autres constituants usuels de telles compositions, caractérisée en ce que le polymère diénique fonctionnalisé est un polymère diénique portant en extrémité de chaîne une fonction silanol ou un bloc polysiloxane ayant une extrémité silanol.

A titre préférentiel de bloc polysiloxane ayant une extrémité silanol conviennent les composés répondant à la formule générale suivante: 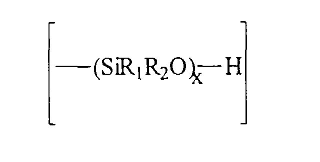 dans laquelle:
- R₁ et R₂, identiques ou différents, représentent un groupe alcoyle, cycloalcoyle, aryle, alkaryle, aralkyle, vinyle ayant de 1 à 10 atomes de carbone,
- x est un nombre entier allant de 1 à 1500 et préférentiellement de 1 à 50.

Par polymères diéniques susceptibles d'être mis en oeuvre dans la composition conforme à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone. A titre de diènes conjugués conviennent notamment le butadiène-1,3, le 2-méthyl-1,3-butadiène, les 2,3-di(alcoyle en C₁ à C₅)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...

Les copolymères peuvent contenir entre 99 % et 20 % en poids d'unités diéniques et de 1 % à 80 % en poids d'unités vinylaromatiques.

Les polymères diéniques fonctionnalisés portant en extrémité de chaîne une fonction silanol ou un bloc polysiloxane ayant une extrémité silanol peuvent avoir toute microstructure qui est fonction des conditions de polymérisation utilisées. Les polymères peuvent être à blocs, statistiques, séquencés, microséquencés, etc... et être préparés en dispersion ou en solution. Lorsqu'il s'agit d'une polymérisation anionique, la microstructure de ces polymères peut être déterminée par la présence ou non d'un agent modifiant et/ou randomisant et les quantités d'agent modifiant et/ou randomisant employées.

A titre préférentiel conviennent les polybutadiènes et en particulier ceux ayant une teneur en unités-1,2 comprise entre 4 % et 80 %, les polyisoprènes, les copolymères de butadiène-styrène et en particulier ceux ayant une teneur en styrène comprise entre 4 et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, les copolymères de butadiène-isoprène et notamment ceux ayant une teneur en isoprène comprise entre 5 et 90 % en poids et une température de transition vitreuse (Tg) de - 40 °C à -80 °C, les copolymères isoprène-styrène et notamment ceux ayant une teneur en styrène comprise entre 5 et 50 % en poids et une Tg comprise entre -25°C et - 50°C. Dans le cas de copolymères de butadiène-styrène-isoprène conviennent ceux ayant une teneur en styrène comprise entre 5 et 50 % en poids et plus particulièrement comprise entre 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 % et plus généralement tout copolymère butadiène-styrène-isoprène ayant une Tg comprise entre -20°C et -70°C.

En tant qu'initiateur de polymérisation, on peut utiliser tout initiateur anionique ou non mono-ou polyfonctionnel connu. Toutefois un initiateur contenant un métal alcalin tel que le lithium ou alcalino-terreux tel que le baryum est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc... Les amidures de lithium sont également des initiateurs préférés car ils conduisent à des polymères ayant un groupement polaire à l'extrémité de chaîne ne portant pas la fonction silanol ou le bloc polysiloxane ayant une extrémité silanol. L'amidure de lithium est obtenu à partir d une amine secondaire acyclique ou cyclique, dans ce dernier cas la pyrrolidine et l'hexaméthylèneimine sont hautement préférées ; ledit amidure pouvant être rendu soluble dans un solvant hydrocarboné grâce à l'utilisation conjointe d un agent de solvatation, un éther par exemple, comme décrit dans le brevet FR 2 250 774. Des composés représentatifs contenant du baryum sont ceux décrits par exemple dans les demandes de brevet FR-A- 2 302 311 et FR-A- 2 273 822 et les certificats d'addition FR-A-2 338 953 et FR-A-2 340 958 dont le contenu est incorporé ici.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

Les polymères diéniques fonctionnalisés mis en oeuvre dans l'invention peuvent être obtenus par analogie par divers procédés. Une première voie consiste à faire réagir comme décrit dans Journal of Polymer Science, Part A, Vol. 3, p. 93-103 (1965) le polymère diénique vivant avec un agent de fonctionnalisation organosilane , de préférence en sortie de réacteur de polymérisation et à une température identique ou différente et de préférence voisine de la température de polymérisation, pour former un polymère diénique ayant en extrémité de chaîne une fonction halogénosilane et à le soumettre, comme décrit dans le manuel « Chemistry and Technology of Silicones, Academic Press, New York, N.Y. (1968) p. 95, à l'action d un donneur de protons pour obtenir le polymère diénique fonctionnalisé silanol en extrémité de chaîne. L'enchaînement de ces 2 réactions a déjà été décrit par Messieurs Greber et Balciunas dans Makromol. Chem. 69, p.193-205 (1963). A titre d'exemples d'agents de fonctionnalisation organosilane susceptibles de réagir avec le polymère diénique vivant, on peut citer les dihalogénosilanes linéaires répondant à la formule:

R₁R₂ Si X₂

dans laquelle:
- R₁ et R₂ identiques ou différents, représentent un groupe alcoyle, cycloalcoyle, aryle, alkaryle, aralkyle, vinyle ayant de 1 à 10 atomes de carbone,
- X représente un atome d'halogène et de préférence le chlore ou le brome.

A titre de composés dihalogénosilanes préférentiels, on peut citer les dichlorodiméthylsilane, dichlorodiéthylsilane, dichlorodiphénylsilane, dichlorophénylméthylsilane, dichlorovinylméthylsilane.

Une seconde voie consiste à faire réagir le polymère vivant avec un agent de fonctionnalisation polysiloxane cyclique pour obtenir un polymère possédant une extrémité SiO⁻ et ce dans un milieu qui ne permet pas la polymérisation du dit cyclopolysiloxane. A titre de polysiloxanes cycliques on peut citer ceux répondant à la formule: 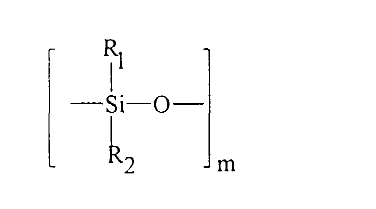 dans laquelle:
- R₁ et R₂ identiques ou différents, représentent un groupe alcoyle, cycloalcoyle, aryle, alkaryle, aralkyle, vinyle ayant de 1 à 10 atomes de carbone,
- m représente un nombre entier de valeur 3 à 8.
et à titre de composés polysiloxanes cycliques préférentiels, on peut citer l'hexaméthylcyclotrisiloxane, le triméthyltriéthylcyclotrisiloxane, l'octaméthylcyclotétrasiloxane, le décaméthylcyclopentasiloxane ainsi que leurs mélanges. Le polymère comportant une extrémité Si0⁻ est ensuite mis à réagir avec un composé donneur de protons pour conduire au polymère diénique fonctionnalisé silanol en extrémité de chaîne.

Une troisième voie consiste à préparer des copolymères à blocs comportant un bloc polysiloxane ayant une extrémité silanol par polymérisation séquencée. Ces copolymères à blocs sont obtenus par la préparation, tel que décrit par exemple dans les brevets US-B-3 483 270 , US-B-3 051 684 et J. Appl. Poly. Sci. Vol. 8, p. 2707-2716 (1964) d un premier bloc d un polymère diénique vivant qui est ensuite mis à réagir, en milieu polaire, avec un polysiloxane cyclique qui se polymérise anioniquement en formant un second bloc pour conduire à un copolymère à blocs séquencé comportant un bloc polysiloxane ayant une extrémité (Si0⁻) lequel est ensuite mis à réagir avec un donneur de protons pour conduire au copolymère diénique à blocs comportant un bloc polysiloxane ayant une fonction silanol en extrémité de chaîne.

Une quatrième voie consiste à préparer des copolymères à blocs comportant un bloc polysiloxane ayant une extrémité silanol par greffage de 2 polymères, par exemple,par greffage d un polysiloxane dilithié ou disodé à un polymère diénique ayant une extrémité (Si X), X représentant un atome d'halogène, le produit de greffage étant ensuite mis à réagir avec un donneur de protons pour conduire au copolymère à blocs comportant un bloc polysiloxane ayant une extrémité silanol comme décrit par exemple par MM.Greber et Balciunas dans Makromol Chem. 79, p. 149-160 (1964) ou cité par MM. Plumb et Atherton dans le manuel « Block Copolymers », Applied Science, England (1973) p. 339.

Bien entendu, on peut ajouter un ou plusieurs agents antioxydants au mélange réactionnel avant récupération du polymère fonctionnalisé par les techniques classiques, c'est-à-dire soit par coagulation, soit par évaporation par quelque moyen que ce soit comme par exemple évaporation sous vide puis séchage si c est nécessaire et même stripping à la vapeur d eau du solvant, ce qui est tout à fait surprenant pour l'homme de l art qui s'attendait à une évolution macrostructurale comme c est habituellement le cas avec des polymères fonctionnalisés par des alcoxysilanes.

Les polymères diéniques fonctionnalisés portant en extrémité de chaîne une fonction silanol ou un bloc polysiloxane ayant une extrémité silanol possèdent une aptitude particulière à être utilisés pour constituer des compositions de caoutchouc comprenant à titre majoritaire de la silice comme charge renforçante.

A titre de silice susceptible d'être mise en oeuvre dans l'invention conviennent toutes les silices précipitées ou pyrogénées connues de l'homme de l art présentant une surface BET ≤ à 450 m²/g et une surface spécifique CTAB ≤ 450 m²/g, même si les silices précipitées hautement dispersibles sont préférées.

Par silice hautement dispersible, on entend toute silice ayant une aptitude à la désagglomération et à la dispersion dans une matrice polymérique très importante observable par microscopie électronique ou optique, sur coupes fines. La dispersibilité de la silice est également appréciée au moyen d un test d'aptitude à la désagglomération aux ultrasons suivi d une mesure, par diffraction sur un granulomètre, de la taille des particules de silice pour déterminer le diamètre médian (D50) des particules et le facteur de désagglomération (F_{D}) après désagglomération comme décrit dans la demande de brevet EP-A-0.520.860 dont le contenu est incorporé ici ou dans l'article paru dans la revue Rubber World, juin 1994, pages 20-24, intitulé « Dispersibility measurements of prec. silicas ».

Comme exemples non limitatifs de telles silices hautement dispersibles préférentielles, on peut citer celles ayant une surface CTAB égale ou inférieure à 450 m2/g et particulièrement celles décrites dans les demandes de brevet européen EP-A-0.157.703 et EP-A-0.520.862, dont le contenu est incorporé ici, par exemple les silices Zeosil 1165 MP et 85 MP de la société Rhône-Poulenc, ou la silice Perkasil KS 430 de la société AKZO, la silice HI-Sil 2000 de la société PPG, les silices Zeopol 8741 ou 8745 de la société Huber.

Toutefois, à titre plus préférentiel, conviennent les silices ayant:
- une surface spécifique CTAB comprise entre 120 et 200 m²/g, de préférence entre 145 et 180 m²/g,
- une surface spécifique BET comprise entre 120 et 200 m²/g, de préférence entre 150 et 190 m²/g,
- une prise d'huile DOP inférieure à 300 ml/100g, de préférence comprise entre 200 et 295 ml/100g,
- un diamètre médian (⌀ 50), après désagglomération aux ultrasons, égal ou inférieur à 3 µm, de préférence inférieur à 2.8 µm, par exemple inférieur à 2.5 µm,
- un facteur de désagglomération aux ultrasons (F_{D}) supérieur à 10 ml, de préférence supérieur à 11 ml, et plus préférentiellement ≥ 21 ml,
- un rapport spécifique BET/surface spécifique CTAB ≥ 1.0 et ≤ 1.2.

L'état physique sous lequel se présente la silice, c'est-à-dire qu elle se présente sous forme de poudre, de microperles, de granulés, de billes, est indifférent.

Bien entendu par silice, on entend également des coupages de différentes silices. La silice peut être utilisée seule ou en présence d'autres charges blanches. La surface spécifique CTAB est déterminée selon la méthode NFT 45007 de novembre 1987. La surface spécifique BET est déterminée selon la méthode de BRUNAUER, EMMET, TELLER décrite dans « The Journal of the American Chemical Society, vol. 80, page 309 (1938) » correspondant à la norme NFT 45007 de novembre 1987. La prise d'huile DOP est déterminée selon la norme NFT 30-022 (mars 1953) en mettant en oeuvre le dioctylphtalate.

L'effet bénéfique au niveau des propriétés de la composition conforme à l'invention est maximal lorsque la charge renforçante est exclusivement constituée par de la silice. Cependant, un effet bénéfique est également obtenu lorsque la charge renforçante contient du noir de carbone à titre minoritaire, c'est-à-dire jusqu'à 49% en poids de la charge totale. L'amélioration des propriétés étant cependant d'autant plus importante que le taux de noir de carbone présent est faible. La quantité de noir de carbone présente est préférentiellement égale ou inférieure à 30% du poids lorsqu'on utilise un coupage noir/silice.

Comme noirs de carbone conviennent tous les noirs de carbone commercialement disponibles ou conventionnellement utilisés dans les pneus et particulièrement dans les bandes de roulement de pneus. A titre d'exemples non limitatifs de tels noirs on peut citer les noirs N 234, N 339, N 326, N 375, etc...

Le polymère diénique fonctionnalisé silanol peut-être utilisé seul dans la composition conforme à l'invention ou être utilisé en coupage avec tout autre élastomère conventionnellement utilisé dans les pneus tel que du caoutchouc naturel ou un coupage à base de caoutchouc naturel et un élastomère synthétique ou encore un autre polymère diénique éventuellement couplé et/ou étoilé ou encore partiellement ou entièrement fonctionnalisé avec une fonction autre qu une fonction silanol. Il est évident que plus la proportion d'élastomère conventionnel présent dans la composition conforme à l'invention est importante, moindre sera l'amélioration des propriétés. C est pourquoi l'élastomère conventionnel peut être présent entre 1 et 70 parties en poids pour 100 parties en poids de polymère fonctionnalisé silanol.

Les compositions conformes à l'invention contiennent, outre un ou plusieurs polymères diéniques et la silice, tout ou partie des autres constituants et additifs habituellement utilisés dans les mélanges de caoutchouc comme des plastifiants, pigments, antioxydants, cires anti-ozonantes, un système de vulcanisation à base soit de soufre et/ou de peroxyde et/ou de bismaleimides, des accélérateurs de vulcanisation, des huiles d'extension, un ou des agents de liaison de la silice à l'élastomère, un ou des agents de recouvrement de la silice tels que des alcoxysilanes, polyols, amines, etc...

L'invention a également pour objet un procédé d'obtention de polymères diéniques portant en extrémité de chaîne une fonction silanol ou un bloc polysiloxane ayant une extrémité silanol consistant à polymériser un ou plusieurs monomère(s) diéniques en présence d un catalyseur permettant d'obtenir un polymère diénique vivant, à le faire réagir avec au moins un organosilane, et à récupérer le polymère diénique portant en extrémité de chaîne une fonction silanol ou un bloc polysiloxane ayant une extrémité silanol par stripping du solvant à la vapeur d eau puis séchage.

L'invention a enfin pour objet un procédé d'obtention de copolymères diéniques à blocs portant en extrémité de chaîne un bloc polysiloxane ayant une extrémité silanol consistant à greffer un polysiloxane dilithié ou disodé à un polymère diénique ayant une extrémité (Si X), X représentant un atome d'halogène, à faire réagir le produit de greffage avec un composé donneur de protons et à récupérer le copolymère à blocs comportant un bloc polysiloxane ayant une extrémité silanol par stripping du solvant à la vapeur d'eau puis séchage.

L'invention a également pour objet des bandes de roulement de pneumatiques et des pneumatiques possédant une résistance au roulement réduite.

L'invention est illustrée à titre non limitatif par les exemples qui ne sauraient constituer une limitation de la portée de l'invention.

Dans les exemples, les propriétés des compositions sont évaluées comme suit :
- Viscosité Mooney ML (1+4) à 100°C, mesurée selon la norme ASTM:D-1646, intitulée Mooney dans les tableaux.
- Modules d'allongement à 300 % (MA 300), 100 % (MA100) et 10 % (MA 10) : mesures effectuées selon la norme ISO 37.
- Indices de cassage Scott : mesurés à 20°C
   Force rupture (FR) en MPa
   Allongement à la rupture (AR) en %
- Pertes hystérétiques (PH): mesurées par rebond à 60°C en %. La déformation pour les pertes mesurées est de 40%
- Dureté Shore A : mesures effectuées selon la norme DIN 53505
- Propriétés dynamiques en cisaillement :
   Mesures en fonction de la déformation : effectuées à 10 Hertz avec une déformation crête-crête allant de 0,15 % à 50 %. La non linéarité exprimée est la différence de module de cisaillement entre 0.15 % et 50 % de déformation en MPa. L'hystérèse est exprimée par la mesure de tgδ à 7 % de déformation et à 23°C selon la norme ASTM D2231-71 (réapprouvée en 1977).

### Exemple 1:

### A - Préparation en continu de copolymères fonctionnalisés et non fonctionnalisés

On prépare un copolymère butadiène-styrène portant une fonction silanol terminale à l'aide d un agent de fonctionnalisation siloxane cyclique (SBR-A), un copolymère butadiène-styrène non fonctionnalisé et stoppé au méthanol (SBR-B) et un copolymère butadiène-styrène fonctionnalisé (SBR-C) avec un tri-alcoxysilane, le 3-glycidyloxypropyltriméthoxysilane (GPTSi).

Les deux derniers copolymères servent de référence. Le SBR-C est un polymère fonctionnalisé dont le procédé de préparation est décrit dans la demande de brevet français FR-94/08.887 déposée le 15/07/1994 dont le contenu est incorporé par référence dans la présente demande.

On prépare un copolymère de butadiène-styrène dans un réacteur de 14 litres de capacité utile avec agitateur de type turbine dans lequel on introduit en continu du toluène, du butadiène, du styrène et du tétrahydrofuranne au rapport massique 100 : 10 : 4.3 : 0.3 et une solution de 500 micromoles de n-butyllithium (n-BuLi) actif pour 100 g de monomères. Les débits de ces différentes solutions sont calculés pour avoir un temps de séjour de 45 minutes sous forte agitation. La température est maintenue constante à 60°C. En sortie de réacteur, la conversion mesurée sur un prélèvement est de 88%. Le SBR contient 26% de styrène incorporé (en masse) et une teneur de 41% en liaisons-1,2 pour la partie butadiénique.

Pour obtenir le SBR-A, on ajoute en sortie de réacteur, à l'entrée d'un mélangeur statique, de l'hexaméthylcyclotrisiloxane (D₃) dans un rapport D₃ / n-BuLi actif= 0.48. La réaction de fonctionnalisation est effectuée à 60°C. Dans le cadre de la synthèse du SBR-B, du méthanol est ajouté à la place du composé D₃ dans un rapport MeOH/n-BuLi actif= 1.5. Dans le cadre de la synthèse du SBR-C, du GPTSi est ajouté à la place du D₃ dans un rapport GPTSi/n-BuLi actif= 2. Dans ce dernier cas, pour assurer l'absence de saut de viscosité, le GPTSi est injecté dans un mélangeur dynamique muni d un agitateur réglé à une vitesse de rotation de 2500 tr./min.

Dans les trois cas, après 5 minutes, on ajoute 0.8 partie pour cent parties d'élastomère (pce) de 2,2'-méthylène bis(4-méthyl-6-tertiobutylphénol) et 0.2 pce de N-(1,3-diméthylbutyl)-N'-phényl-p-phénylènediamine en tant qu'antioxydants. Les polymères sont récupérés par l'opération classique de récupération par stripping à la vapeur d 'eau du solvant puis séchés sur outil à cylindres à 100°C pendant 10 minutes. Les viscosités inhérentes(dl/g) sont mesurées à 25°C en solution à 1 g/l dans le toluène avant l'opération de stripping.

Les taux de fonction (Fn) sont calculés par RMN ¹H et suite à la détermination de la masse moléculaire par osmométrie. La masse moléculaire dans les trois cas est de 175000 g.mole⁻¹. Le taux de fonction (Fn) est défini par le rapport molaire de fonction liée au polymère par mole de polymère. Les analyses RMN ¹H sont effectuées dans le CS2 sur des échantillons ayant subi trois cycles de dissolution dans le toluène et coagulation dans le méthanol afin d'éliminer toute trace d'agent de fonctionnalisation résiduel, c'est-à-dire non lié au polymère. Le spectre RMN ¹H du SBR-A fonctionnalisé est caractérisé par des massifs à 0 ppm et -0.1 ppm correspondants au groupement [-Si(CH₃)₂-OH]. Le spectre RMN ¹H du SBR-C fonctionnalisé GPTSi est caractérisé par un massif à 3.40 ppm correspondant au motif [-Si(OCH₃)₂.]
Les résultats d'analyse sont consignés dans le tableau 1.

**TABLEAU 1**

| SBR | Agent | Visc. Inh. | Mooney | Si(CH₃)₂ méq/Kg | Si(OCH₃)₂ méq/Kg | Fn |
|---|---|---|---|---|---|---|
| A | D₃ | 1.96 | 60 | 4.6 | - | 81 |
| B | MeOH | 1.99 | 59 | - | - | - |
| C | GPTSi | 2.01 | 62 | - | 4.7 | 82 |

Les résultats montrent que :
- le polymère fonctionnalisé SBR-A a un taux de fonction de 81%. Ce taux est le même que celui d un polymère fonctionnalisé avec du GPTSi.
- le polymère fonctionnalisé SBR-A ne subit aucune évolution de macrostructure pendant l'opération de stripping, et donc aucune altération qualitative et quantitative des fonctions silanols, ce qui est tout à fait surprenant pour l'homme de l'art.

### B - Préparation des compositions

Les 3 copolymères décrits ci-dessus sont mis en oeuvre dans une composition réalisée selon la méthode décrite dans la demande de brevet EP-A-0.501.227, incorporée dans la présente demande, étant précisé qu on opère un travail thermo-mécanique en deux étapes qui durent respectivement 5 et 4 minutes, pour une vitesse moyenne des palettes de 45 tours/minute jusqu'à atteindre une température maximale de tombée identique de 160°C tandis que l'introduction du système de vulcanisation est effectué à 30°C sur un outil à cylindres.

La formulation suivante est utilisée pour réaliser les 7 compositions, toutes les parties sont exprimées en poids :

| | |
|---|---|
| Elastomère | 100 |
| Silice (*) | 80 |
| Huile aromatique | 40 |
| Agent de liaison(**) | 6,4 |
| Oxyde de zinc | 2,5 |
| Acide stéarique | 1,5 |
| Antioxydant (a) | 1,9 |
| paraffine(b) | 1,5 |
| Soufre | 1,1 |
| Sulfénamide (c) | 2 |
| Diphénylguanidine | 1,5 |

| | |
|---|---|
| (*) la silice est une silice hautement dispersible sous forme de microperles commercialisée par la Société Rhône-Poulenc sous la dénomination commerciale Zeosil 1165 MP. | |
| (**) organosilane polysulfuré commercialisé par la Société Degussa sous la dénomination SI69. | |
| (a) : antioxydant : N-(1,3-diméthyl-butyl)-N'-phényl-p-phénylènediamine | |
| (b) : paraffine : mélange de cires macro et microcristallines | |
| (c) : Sulfénamide : N-cyclohexyl-2-benzothiazyl sulfénamide | |

La vulcanisation est effectuée à 150°C pendant 40 minutes. On compare entre elles les propriétés de ces 3 compositions tant à l'état non vulcanisé qu'à l'état vulcanisé.

Les résultats sont consignés dans le tableau 2.

**TABLEAU 2**

| Compositions | SBR-A | SBR-B | SBR-C |
|---|---|---|---|
| Propriétés à l'état non vulcanisé | | | |
| Mooney | 83 | 67 | 75 |

| Propriétés à l'état vulcanisé | | | |
|---|---|---|---|
| Shore A | 59.7 | 66.0 | 61.0 |
| MA10 | 4.33 | 5.01 | 4.49 |
| MA100 | 1.59 | 1.57 | 1.63 |
| MA300 | 2.08 | 1.82 | 2.14 |
| MA300/MA100 | 1.31 | 1.16 | 1.31 |

| Indices de cassage Scott à | | | |
|---|---|---|---|
| 20°C FR | 22.8 | 19.8 | 20.8 |
| 20°C AR % | 600 | 600 | 540 |
| PH 60°C (*) | 23.8 | 34.7 | 25.3 |

| Propriétés dynamiques en fonction de la déformation | | | |
|---|---|---|---|
| Δ G à 23°C | 1.84 | 4.80 | 2.34 |
| tgδ à 23°C | 0.273 | 0.380 | 0.317 |

| | | | |
|---|---|---|---|
| (*) la déformation pour cette perte hystérétique est de 40 % | | | |

On constate au niveau des propriétés à l'état vulcanisé, d'une part que globalement la résistance mécanique de la composition comportant le SBR-A fonctionnalisé silanol conforme à l'invention est supérieure à celle des compositions de référence mettant en oeuvre les SBR-B et -C, ce qui est favorable en matière de résistance à l'usure d'un pneumatique muni d'une bande de roulement constituée par une telle composition, et d'autre part que les propriétés hystérétiques tant aux fortes qu'aux faibles déformations sont améliorées par rapport à celles exhibées par les compositions mettant en oeuvre le SBR-B et -C, ce qui est favorable pour diminuer la résistance au roulement d'un pneumatique muni d'une bande de roulement constituée par une telle composition et pour constituer une sous-couche de bande de roulement ou une gomme de flanc.

### Exemple 2:

### A - Préparation en discontinu de copolymères fonctionnalisés et non fonctionnalisés

### Préparation du SBR-D fonctionnalisé silanol :

On prépare dans un premier temps un copolymère de butadiène-styrène en injectant 167 g de styrène, 476 g de butadiène et 2000 ppm de THF dans un réacteur de 10 litres contenant 6.4 litres d'heptane désaéré. Les impuretés sont neutralisées à l'aide de n-BuLi puis on ajoute 0.0038 mole de n-BuLi ainsi que 0.0011 mole de tertiobutylate de sodium utilisé comme agent randomisant, la polymérisation est conduite à 55°C.

Dans un second temps, à 90% de conversion, on prélève une partie aliquote, on stoppe au méthanol et mesure la viscosité du polymère qui est de 1.40 dl/g. Au reste on injecte dans le réacteur 0.0013 mole d'hexaméthylcyclotrisiloxane (D₃). La solution de polymère est agitée pendant 15 minutes à 55°C. La conversion et la viscosité n ont pas changé à l'issue de cette opération. Le polymère est antioxydé par addition de 0.80 pce de 2,2-méthylène bis(4-méthyl-6-tertiobutylphénol) et 0.20 pce de N-(1,3-diméthylbutyl)-N'-phényl-p-phénylènediamine, puis récupéré par stripping à la vapeur d'eau et séché sur outil à cylindres à 100°C.

La viscosité inhérente après stoppage du copolymère (SBR-D) est de 1.40 dl/g, la viscosité Mooney ML(1+4, 100°C) est de 26, et le pourcentage de styrène incorporé, déterminé par RMN du proton est de 26% (pourcentage massique), et le taux d'enchaînements vinyliques est de 41% de la partie butadiénique.

L'analyse RMN donne un taux de fonctionnalisation [-Si(CH₃)₂]-OH de 4.5 méq/Kg, ce qui compte tenu de la masse moléculaire du copolymère donnée par l'osmométrie (155000 g/mole), correspond à un taux de fonctionnalisation [SiOH] d'environ 70%.

### Préparation du SBR-E non fonctionnel stoppé au méthanol:

On opère dans un premier temps à une copolymérisation dans des conditions opératoires identiques à celles décrites pour la préparation du SBR-D.
Dans un second temps, à 90% de conversion, on injecte dans le réacteur 0.008 mole de méthanol. La solution de polymère est agitée pendant 15 minutes à 55°C. Le polymère est antioxydé par addition de 0.20 pce de 2,2-méthylène bis(4-méthyl-6-tertiobutylphénol) et 0.20 pce de N-(1,3-diméthylbutyl)-N'-p-phénylènediamine, puis récupéré par stripping à la vapeur d 'eau sur outil à cylindres à 100°C.

La viscosité inhérente du polymère (SBR-E) stoppé est de 1.40 dl/g, la viscosité Mooney ML(1+4, 100°C) est de 26, le pourcentage de styrène incorporé est de 26% (pourcentage massique) et le taux d'enchaînements vinyliques est de 41% par rapport à la partie butadiénique.

### Préparation du SBR-F fonctionnalisé GPTSi :

Dans un réacteur de 100 litres contenant 64 litres d'heptane désaéré, on injecte 1670 g de styrène, 4760 g de butadiène et 2000 ppm de THF. Les impuretés sont neutralisées à l'aide de n-BuLi puis on ajoute 0.044 mole de n-BuLi ainsi que 0.0013 mole de tertiobutylate de sodium utilisé comme agent randomisant, la polymérisation est conduite à 55°C.

A 90% de conversion, on prélève une partie aliquote, on stoppe au méthanol et mesure la viscosité du polymère: 1.25 dl/g. Avec le reste on effectue la fonctionnalisation GPTSi en sortie réacteur lors de la vidange. Le GPTSi (0.176 mole) est ajouté au polymère vivant à l'entrée d un mélangeur dynamique ayant un volume de 1.6 litre muni d un agitateur réglé à une vitesse de rotation de 1500 tr./min. Le temps de vidange est de 90 secondes.

Après 15 minutes d'agitation dans un second réacteur situé en aval du mélangeur dynamique, le polymère est antioxydé par addition de 0.80 pce de 2,2'-méthylène bis(4-méthyl-6-tertiobutylphénol) et 0.20 pce de N-(1,3-diméthylbutyl)-N'-p-phénylènediamine, puis récupéré par stripping à la vapeur d eau et séché sur outil à cylindres à 100°C.

La viscosité inhérente du copolymère fonctionnalisé SBR-F est de 1.42 dl/g, la viscosité Mooney ML(1+4, 100°C) est de 30, le pourcentage de styrène incorporé, déterminé par RMN du proton est de 26% (pourcentage massique) et le taux d'enchaînements vinyliques est de 41% de la partie butadiénique.

L'analyse RMN ¹H donne un taux de silicium de 4.1 méq/Kg, ce qui compte tenu de la masse moléculaire du copolymère donnée par l'osmométrie (170000 g/mole), atteste d un bon niveau de fonctionnalisation.

### B - Préparation de compositions

Les 3 copolymères préparés ci-dessus en discontinu sont mis en oeuvre dans une composition identique à celle décrite à l'exemple précédent. Les résultats sont consignés dans le tableau 3.

**TABLEAU 3**

| Compositions | SBR-D | SBR-E | SBR-F |
|---|---|---|---|
| Propriétés à l'état non vulcanisé | | | |
| Mooney | 74 | 47 | 59 |

| Propriétés à l'état vulcanisé | | | |
|---|---|---|---|
| Shore | 57.1 | 65.0 | 59.6 |
| MA10 | 3.65 | 5.10 | 4.14 |
| MA100 | 1.60 | 1.59 | 1.70 |
| MA300 | 2.28 | 1.85 | 2.34 |
| MA300/MA100 | 1.43 | 1.16 | 1.38 |

| Indices de cassage Scott à | | | |
|---|---|---|---|
| 20°C FR | 21.6 | 19.4 | 20.8 |
| 20°C AR % | 550 | 590 | 520 |
| PH60°C (*) | 20.6 | 35.0 | 24.0 |

| Propriétés dynamiques en fonction de la déformation | | | |
|---|---|---|---|
| Δ G à 23°C | 1.00 | 4.90 | 1.32 |
| tgδ à 23°C | 0.204 | 0.384 | 0.232 |

| | | | |
|---|---|---|---|
| (*) la déformation pour cette perte hystérétique est de 40 % | | | |

Au vu des propriétés à l'état vulcanisé, le SBR-D confère à la composition le mettant en oeuvre et conforme à l invention des propriétés d'hystérèse à faible déformation et à forte déformation ainsi que des propriétés de renforcement et de tenue à la rupture significativement meilleures que celles obtenues avec la composition de référence mettant en oeuvre le SBR-F et très fortement améliorées par rapport à la composition de référence mettant en oeuvre le SBR-E.

### Exemple 3:

### A - Préparation en continu de copolymères fonctionnalisés et non fonctionnalisés

On prépare un copolymère butadiène-styrène portant une fonction silanol terminale à l'aide d un agent de fonctionnalisation organosilane linéaire, en l'occurrence le dichlorodiméthylsilane (SBR-H). On prépare également comme à l'exemple 1 deux copolymères de référence, à savoir un copolymère butadiène-styrène fonctionnalisé à l'aide de GPTSi (SBR-I) et un copolymère de butadiène-styrène non fonctionnalisé stoppé au méthanol (SBR-G).

Un réacteur de 32 litres est chargé en continu avec une solution de toluène, butadiène, styrène et tétrahydrofuranne. Le rapport massique de ces produits est de 100 : 10.1 : 4.1 : 0.3 respectivement. Ce réacteur est aussi alimenté en continu avec 0.890 mmole de n-BuLi pour cent grammes de monomères. La polymérisation est conduite à 60°C sous forte agitation et le débit des constituants est réglé pour avoir un temps de séjour moyen de 45 minutes.

En sortie de réacteur la conversion, mesurée sur un prélèvement, est de 92 %. Le polymère contient 25% de styrène (en masse) et est caractérisé par un taux d'enchaînements vinyliques de 41% de la fraction butadiénique.

En sortie de réacteur, à l'entrée d un mélangeur statique, est ajouté le dichlorodiméthylsilane (CH₃)₂SiCl₂ au rapport [ (CH₃)₂SiCl₂] / [n-BuLi actif] de 1.5. Le polymère SBR-H ainsi obtenu est récupéré par stripping à la vapeur après l'addition de 0.8 pce de 2,2'-méthylène bis(4-méthyl-6-tertiobutylphénol) et 0.2 pce de N-(1,3-diméthyl-butyl)-N'-phényl-p-phénylènediamine comme antioxydants puis séché sur outil à cylindres à 100°C. Il possède une viscosité inhérente de 1.52 dl/g et une viscosité Mooney de 32. L'analyse RMN ¹H donne un taux de fonctionnalisation [SiOH] de 8.0 méq/Kg, ce qui correspond à un taux de fonction Fn de 89% (Masse moléculaire de 110000 g/mole donnée par l'osmométrie).

On constate qu au rapport [agent de fonctionnalisation] / [extrémité réactive] de 1.5, il n y a pas de façon significative de réaction de couplage entre chaînes. Par ailleurs, il n y a pas d'évolution macrostructurale du polymère lors de l'opération de stripping.

On utilise le même mode opératoire pour préparer 3 copolymères fonctionnalisés avec les agents de fonctionnalisation suivants :

le dichlorodiphénysilane (DCDPSi)-(SBR-J), le dichlorophénylméthylsilane (DCPMSi)-(SBR-K), le dichlorovinylméthylsilane (DCVMSi)-(SBR-L), si ce n est qu on utilise un mélangeur dynamique muni d un agitateur réglé à 2500 tours/mn et que les antioxydants sont ajoutés après 5 minutes.

Les résultats d'analyse des polymères sont consignés dans le tableau 4.

**TABLEAU 4**

| SBR | Agent | Visc. Inh. | Mooney | Fn* | SV |
|---|---|---|---|---|---|
| G | | 1,47 | 30 | | |
| H | (CH)₂SiCl₂ | 1.52 | 32 | 89 | 1.03 |
| J | DCDPSi | 1.50 | 32 | - | 1.02 |
| K | DCPMSi | 1.54 | 31 | 78 | 1.05 |
| L | DCVMSi | 1.54 | 33 | 72 | 1.05 |

| | | | | | |
|---|---|---|---|---|---|
| * la masse moléculaire mesurée par osmométrie du polymère H est de 110 000 g/mol; cette valeur a également été utilisée pour la détermination des taux de fonction des polymères K et L. | | | | | |

Les SBR J, K et L tout comme le SBRH n ont subi aucune évolution macrostructurale lors des opérations de stripping et de séchage.

Pour la préparation du SBR-G et du SBR-I, on opère respectivement dans les mêmes conditions que pour les SBR-B et SBR-C dans l'exemple 1. Le SBR-G possède une viscosité inhérente de 1.47 dl/g et une viscosité Mooney de 30. Le SBR-I ainsi préparé a une viscosité inhérente de 1.48 dl/g, une viscosité Mooney de 30 et un taux de fonctionnalisation déterminé par RMN de 7.7 méq/Kg (Fn de 85%, masse moléculaire de 110000 g/mol).

### B - Préparation de compositions

Les six copolymères préparés ci-dessus sont mis en oeuvre dans une composition identique à celle décrite à l'exemple 1. Les résultats sont consignés dans le tableau 5.

**TABLEAU 5**

| Compositions | SBR G | SBR H | SBR J | SBR K | SBR L | SBR I |
|---|---|---|---|---|---|---|
| Propriétés à létat non vulcanisé | | | | | | |
| Mooney | 42 | 62 | 61 | 63 | 65 | 57 |

| Propriétés à létat vulcanisé | | | | | | |
|---|---|---|---|---|---|---|
| Shore | 67.0 | 59.3 | 59.3 | 58.9 | 59.3 | 59.0 |
| MA10 | 5.21 | 4.09 | 4.19 | 4.02 | 4.19 | 4.02 |
| MA100 | 1.60 | 1.59 | 1.66 | 1.59 | 1.59 | 1.63 |
| MA300 | 1.85 | 1.97 | 2.06 | 2.08 | 1.97 | 2.14 |
| MA300/MA100 | 1.16 | 1.24 | 1.24 | 1.31 | 1.24 | 1.31 |

| Indices de cassage SCOTT à | | | | | | |
|---|---|---|---|---|---|---|
| 20° C FR | 19.1 | 20.3 | 20.0 | 19.8 | 20.0 | 20.5 |
| 20°CAR % | 590 | 590 | 580 | 590 | 560 | 580 |
| PH60°C(*) | 36.7 | 28.0 | 28.0 | 27.6 | 28.0 | 28.0 |

| Propriétés dynamiques en fonction de la déformation | | | | | | |
|---|---|---|---|---|---|---|
| Δ G à 23°C | 4.98 | 1.96 | 2.04 | 1.97 | 2.05 | 1.60 |
| tgδ à 23°C | 0.398 | 0.275 | 0.280 | 0.275 | 0.282 | 0.264 |

| | | | | | | |
|---|---|---|---|---|---|---|
| (*) la déformation pour cette perte hystérétique est de 40 %. | | | | | | |

Les propriétés à l'état vulcanisé des compositions montrent que les compositions conformes à l'invention possèdent des propriétés d'hystérèse à faible déformation et à forte déformation ainsi que des propriétés de renforcement et de tenue à la rupture identiques ou très proches de celles obtenues avec la composition de référence à base de SBR-I et très fortement améliorées par rapport à celles de la composition de référence mettant en oeuvre le SBR-G non fonctionnalisé, ce qui est très favorable pour obtenir un pneumatique possédant une résistance au roulement réduite lorsque cette composition conforme à l'invention est utilisée soit à titre de bande de roulement, soit en tant que sous-couche de bande de roulement ou encore en tant que gomme de flanc.

## Revendications

1. Composition de caoutchouc vulcanisable comprenant au moins un polymère diénique fonctionnalisé, de la silice à titre de charge renforçante, caractérisée en ce que le polymère diénique fonctionnalisé est un polymère diénique portant en extrémité de chaîne une fonction silanol ou un bloc polysiloxane ayant une extrémité silanol et en ce que la silice est présente à titre majoritaire.

2. Composition selon la revendication 1, caractérisée en ce que le bloc polysiloxane ayant une extrémité silanol répond à la formule: 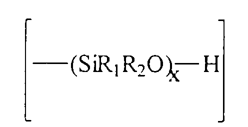 dans laquelle:
- R₁ et R₂ identiques ou différents représentent un groupe alcoyle, cycloalcoyle, aryle, alkaryle, aralkyle, vinyle ayant de 1 à 10 atomes de carbone,
- x est un nombre entier allant de 1 à 1500.

3. Composition selon la revendication 2, caractérisée en ce que R1, R2 représentent un groupe alcoyle ayant de 1 à 5 atomes de carbone et préférentiellement le groupe méthyl.

4. Composition selon l'une quelconque des revendications 1 à 3, caractérisée en ce que le polymère diénique est un copolymère de butadiène-styrène ou de butadiène-styrène-isoprène.

5. Composition selon la revendication 4, caractérisée en ce qu'elle comprend en outre du polybutadiène et/ou un copolymère de butadiène-isoprène et/ou du caoutchouc naturel.

6. Composition selon l'une quelconque des revendications 1 à 5, caractérisée en ce que la silice constitue la totalité de la charge renforçante.

7. Composition selon l'une quelconque des revendications 1 à 5, caractérisée en ce que la charge renforçante est constituée par de la silice et du noir de carbone à titre minoritaire.

8. Composition selon l'une quelconque des revendications 1 à 7, caractérisée en ce que la silice est une silice précipitée hautement dispersible ayant une surface CTAB ≤ 450 m²/g et une surface BET ≤ 450 m²/g.

9. Composition selon la revendication 8, caractérisée en ce que la silice possède un rapport surface spécifique BET / surface spécifique CTAB ≥ à 1 et ≤ à 1,2.

10. Pneumatique possédant une faible résistance au roulement, comprenant une composition de caoutchouc vulcanisée comprenant au moins un polymère diénique fonctionnalisé, de la silice à titre de charge renforçante, caractérisé en ce que le polymère diénique fonctionnalisé est un polymère diénique portant en extrémité de chaîne une fonction silanol ou un bloc polysiloxane ayant une extrémité silanol et en ce que la silice est présente à titre majoritaire.

11. Pneumatique selon la revendication 10, caractérisé en ce que la composition entre dans la constitution de la bande de roulement.

12. Bande de roulement de pneumatique constituée par une composition de caoutchouc vulcanisée comprenant au moins un polymère diénique fonctionnalisé, de la silice à titre de charge renforçante, caractérisée en ce que le polymère diénique fonctionnalisé est un polymère diénique portant en extrémité de chaîne une fonction silanol ou un bloc polysiloxane ayant une extrémité silanol et en ce que la silice est présente à titre majoritaire.

13. Procédé d'obtention d un polymère diénique portant en extrémité de chaîne une fonction silanol ou un bloc polysiloxane ayant une extrémité silanol consistant à polymériser un ou plusieurs monomère(s) diéniques en présence d'un catalyseur permettant d'obtenir un polymère diénique vivant, à le faire réagir avec au moins un organosilane, et à récupérer le polymère diénique portant en extrémité de chaîne une fonction silanol ou un bloc polysiloxane ayant une extrémité silanol par stripping du solvant à la vapeur d eau puis séchage.

14. Procédé d'obtention d'un copolymère diénique portant en extrémité de chaîne un bloc polysiloxane ayant une extrémité silanol consistant à greffer un polysiloxane dilithié ou disodé à un polymère diénique ayant une extrémité (SiX), X représentant un atome d'halogène, à faire réagir le produit de greffage avec un composé donneur de protons et à récupèrer le copolymère à blocs comportant un bloc polysiloxane ayant une extrémité silanol par stripping du solvant à la vapeur d'eau puis séchage.

## Patentansprüche

1. Vulkanisierbare Kautschukzusammensetzung, die mindestens ein funktionalisiertes Dienpolymer und Kieselsäure als verstärkenden Füllstoff enthält, dadurch gekennzeichnet, daß das funktionalisierte Dienpolymer ein Dienpolymer ist, das am Kettenende eine Silanolgruppe oder einen Polysiloxan-Block mit einer Silanol-Endgruppe trägt, und daß der verstärkende Füllstoff überwiegend aus Kieselsäure besteht.

2. Zusammensetzung nach Anspruch 1, dadurch gekennzeichnet, daß der Polysiloxan-Block mit einer Silanol-Endgruppe die Formel 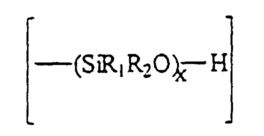 aufweist, in der bedeuten:
- R₁ und R₂, die identisch oder verschieden sind, Alkyl, Cycloalkyl, Aryl, Alkylaryl, Aralkyl, Vinyl, die 1 bis 10 Kohlenstoffatome aufweisen,
- x eine ganze Zahl von 1 bis 1500.

3. Zusammensetzung nach Anspruch 2, dadurch gekennzeichnet, daß R₁, R₂ Alkylgruppen mit 1 bis 5 Kohlenstoffatomen und vorzugsweise Methyl darstellen.

4. Zusammensetzung nach einem der Ansprüche 1 bis 3, dadurch gekennzeichnet, daß das Dienpolymer ein Butadien-Styrol- oder Butadien-Styrol-Isopren-Copolymer ist.

5. Zusammensetzung nach Anspruch 4, dadurch gekennzeichnet, daß sie außerdem Polybutadien und/oder ein Butadien-Isopren-Copolymer und/oder Naturkautschuk enthält.

6. Zusammensetzung nach einem der Ansprüche 1 bis 5, dadurch gekennzeichnet, daß der verstärkende Füllstoff vollständig aus Kieselsäure besteht.

7. Zusammensetzung nach einem der Ansprüche 1 bis 5, dadurch gekennzeichnet, daß der verstärkende Füllstoff aus Kieselsäure und Ruß als in geringerem Anteil enthaltener Füllstoff besteht.

8. Zusammensetzung nach einem der Ansprüche 1 bis 7, dadurch gekennzeichnet, daß die Kieselsäure eine hoch dispergierbare Fällungskieselsäure mit einer CTAB-Oberfläche ≤ 450 m²/g und einer BET-Oberfläche ≤ 450 m²/g ist.

9. Zusammensetzung nach Anspruch 8, dadurch gekennzeichnet, daß die Kieselsäure ein Verhältnis der spezifischen BET-Oberfläche zur spezifischen CTAB-Oberfläche ≥ 1 und ≤ 1,2 aufweist.

10. Luftreifen mit geringem Rollwiderstand, der eine vulkanisierte Kautschukzusammensetzung enthält, die mindestens ein funktionalisiertes Dienpolymer und Kieselsäure als verstärkenden Füllstoff enthält, dadurch gekennzeichnet, daß das funktionalisierte Dienpolymer ein Dienpolymer ist, das am Kettenende eine Silanolgruppe oder einen Polysiloxan-Block mit einer Silanol-Endgruppe trägt und daß der verstärkende Füllstoff überwiegend aus Kieselsäure besteht.

11. Luftreifen nach Anspruch 10, dadurch gekennzeichnet, daß die Zusammensetzung in dem Laufstreifen enthalten ist.

12. Laufstreifen eines Luftreifens, die aus einer vulkanisierten Kautschukzusammensetzung besteht, die mindestens ein funktionalisiertes Dienpolymer und Kieselsäure als verstärkenden Füllstoff enthält, dadurch gekennzeichnet, daß das funktionalisierte Dienpolymer ein Dienpolymer ist, das am Kettenende eine Silanolgruppe oder einen Polysiloxan-Block mit einer Silanol-Endgruppe trägt und daß der verstärkende Füllstoff überwiegend aus Kieselsäure besteht.

13. Verfahren zur Herstellung eines Dienpolymers, das am Kettenende eine Silanolgruppe oder einen Polysiloxan-Block mit einer Silanol-Endgruppe trägt, das darin besteht, ein oder mehrere Dienmonomere in Gegenwart eines Katalysators, mit dem die Herstellung eines lebenden Dienpolymers möglich ist, zu polymerisieren, dieses lebende Dienpolymer mit mindestens einem Organosilan umzusetzen und das Dienpolymer, das am Kettenende eine Silanolgruppe oder einen Polysiloxan-Block mit einer Silanol-Endgruppe trägt, durch Wasserdampf-Stripping des Lösungsmittels und anschließendes Trocknen zu gewinnen.

14. Verfahren zur Herstellung eines Diencopolymers, das am Kettenende eine Silanolgruppe oder einen Polysiloxan-Block mit einer Silanol-Endgruppe trägt, das darin besteht, ein Dilithium-Polysilan oder Dinatrium-Polysilan mit einem Dienpolymer mit einem Ende (SiX), worin X ein Halogenatom darstellt, zu pfropfen, das Produkt der Pfropfungsreaktion mit einer Protonehdonor-Verbindung umzusetzen und das Block-Copolymer, das einen Polysiloxan-Block mit einer Silanol-Endgruppe enthält, durch Wasserdampf-Stripping des Lösungsmittels mit Wasserdampf und anschließendes Trocknen zu gewinnen.

## Claims

1. A vulcanisable rubber composition comprising at least one functionalised diene polymer and silica as reinforcing filler, characterised in that the functionalised diene polymer is a diene polymer bearing as chain end a silanol function or a polysiloxane block which has a silanol end and in that the silica is present as major component.

2. A composition according to claim 1, characterised in that the polysiloxane block which has a silanol end corresponds to the formula: 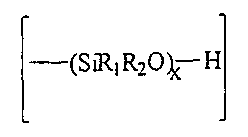 in which:
- R₁ and R₂, which are identical or different, denote an alkyl, cycloalkyl, aryl, alkaryl, aralkyl or vinyl group which has from 1 to 10 carbon atoms,
- x is an integer ranging from 1 to 1500.

3. A composition according to claim 2, characterised in that R₁ and R₂ denote an alkyl group which has from 1 to 5 carbon atoms, and preferably the methyl group.

4. A composition according to any one of claims 1 to 3, characterised in that the diene polymer is a butadiene-styrene or butadiene-styrene-isoprene copolymer.

5. A composition according to claim 4, characterised in that it additionally comprises polybutadiene and/or a butadiene-isoprene copolymer and/or natural rubber.

6. A composition according to any one of claims 1 to 5, characterised in that silica constitutes the entire reinforcing filler.

7. A composition according to any one of claims 1 to 5, characterised in that the reinforcing filler consists of silica and carbon black as a minor component.

8. A composition according to any one of claims 1 to 7, characterised in that the silica is a highly dispersible precipitated silica which has a CTAB surface area ≤ 450 m²/g and a BET surface area ≤ 450 m²/g.

9. A composition according to claim 8, characterised in that the silica has a ratio of BET specific surface area/CTAB specific surface area ≥ 1 and ≤ 1.2.

10. A tyre which has a low rolling resistance, comprising a vulcanised rubber composition comprising at least one functionalised diene polymer and silica as reinforcing filler, characterised in that the functionalised diene polymer is a diene polymer bearing as chain end a silanol function or a polysiloxane block which has a silanol end and in that the silica is present as major component.

11. A tyre according to claim 10, characterised in that the composition constitutes the tread.

12. A tyre tread formed by a vulcanised rubber composition comprising at least one functionalised diene polymer and silica as reinforcing filler, characterised in that the functionalised diene polymer is a diene polymer bearing as chain end a silanol function or a polysiloxane block which has a silanol end and in which the silica is present as major component.

13. A process for obtaining a diene polymer bearing as chain end a silanol function or a polysiloxane block which has a silanol end, consisting of polymerising one or more diene monomer(s) in the presence of a catalyst which makes it possible to obtain a living diene polymer, reacting it with at least one organosilane and recovering the diene polymer bearing as chain end a silanol function or a polysiloxane block which has a silanol end, by stripping the solvent with steam and then drying.

14. A process for obtaining a diene copolymer bearing as chain end a polysiloxane block which has a silanol end, consisting of grafting a dilithiated or disodiated polysiloxane onto a diene polymer which has an SiX end, X denoting a halogen atom, reacting the product of grafting with a proton-donor compound and recovering the block copolymer comprising a polysiloxane block which has a silanol end by stripping the solvent with steam and then drying.
